# EUROPÄISCHE PATENTSCHRIFT

(11) **EP 4 431 734 B1**
(45) Veröffentlichungstag und Bekanntmachung des Hinweises auf die Patenterteilung: **28.10.2026**
(21) Anmeldenummer: 24190022.4
(22) Anmeldetag: 13.07.2018
(51) Int. Cl.: F03D 1/06, F03D 17/00

(54) **BLATTBIEGEMOMENTBESTIMMUNG MIT ZWEI LASTSENSOREN PRO ROTORBLATT UND UNTER EINBEZUG VON ROTORDATEN**
DETERMINING BLADE BENDING MOMENT USING TWO LOAD SENSORS PER ROTOR BLADE AND TAKING ROTOR DATA INTO CONSIDERATION
DÉTERMINATION DU MOMENT DE FLEXION D'UNE PALE À L'AIDE DE DEUX CAPTEURS DE CHARGE PAR PALE DE ROTOR ET AVEC INTÉGRATION DE DONNÉES DE ROTOR

(30) Priorität: 14.07.2017 DE 102017115926
(43) Veröffentlichungstag der Anmeldung: 18.09.2024
(62) Dokumentnummer(n) der früheren Anmeldung(en) nach Art. 76 EPÜ: 18742457.7 / 3 652 431
(73) Patentinhaber: VC VIII Polytech Holding ApS, 6740 Bramming (DK)
(72) Erfinder: SCHMID, Markus, 80636 München (DE); SCHAUSS, Thomas, 82205 Gilching (DE)
(74) Vertreter: Zacco Denmark A/S

(56) Entgegenhaltungen:
- EP-A1- 2 354 538
- EP-A2- 2 112 375
- WO-A1-2017/000947
- DE-A1- 102012 108 776
- DE-A1- 102013 007 744

## Beschreibung

### TECHNISCHES GEBIET

Ausführungsformen der vorliegenden Erfindung betreffen im Allgemeinen eine Steuerung und/oder Regelung bzw. Überwachung des Betriebs von Windenergieanlagen. Insbesondere betreffen Ausführungsformen Vorrichtungen und Verfahren mit einem Dehnungs -Messsystemen unter Berücksichtigung bzw. Messung von Rotordaten.

### STAND DER TECHNIK

Windenergieanlagen unterliegen einer komplexen Steuerung bzw. Regelung, die zum Beispiel durch wechselnde Betriebsbedingungen notwendig sein kann. Ferner sind zur Überwachung des Zustands einer Windenergieanlage Messungen notwendig. Durch die mit dem Betrieb einer Windenergieanlage verknüpften Bedingungen, zum Beispiel Temperaturschwankungen, Witterung und Wetterverhältnisse, aber auch insbesondere stark wechselnde Windverhältnisse, sowie durch die Vielzahl von gesetzlich vorgeschriebenen Sicherheitsmaßnahmen sind die Überwachung und die für die Überwachung notwendigen Sensoren einer Vielzahl von Randbedingungen unterworfen.

Rotorblätter können mit Dehnungssensoren, Beschleunigungssensoren, oder weiterer Sensorik ausgerüstet sein, um Blattlasten, Beschleunigungen, oder weitere physikalische Messgrößen zu erfassen. Bisher werden Blattbiegemomente über Lastsensoren, die im Rotorblatt zur Verfügung gestellt sind, gemessen. Es werden typischerweise vier Dehnungssensoren in der Blattwurzel in Paaren in einer Halbbrücke miteinander verschaltet. Hierbei ist zu beachten, dass durch zusätzliche Sensoren - über zwei Sensoren hinaus - Messunsicherheiten minimiert werden sollen. Hierfür wird das System mit mehr als zwei Lastsensoren überbestimmt. Zum Beispiel beschreibt US 2009/0246019 ein Messsystem bestehend aus vier Dehnungssensoren in der Blattwurzel zur Eiserkennung. Grundlage für die Messung der Rotorblattbiegemomente in Windenergieanlagen ist die Norm IEC61400-13. Hierin ist beschrieben, wie über die direkte Messung durch Dehnungssensoren in der Blattwurzel und einer entsprechenden Kalibrierung auf die indirekte Messgröße der Blattbiegemomente geschlossen werden kann. Hierfür werden vier Dehnungssensoren in azimutal gegenüberliegenden Paaren für die Bestimmung der Momente genutzt. Diese Anordnung unterdrückt die ungewollten Gleichanteile (Zentripetalkraft, Temperaturdehnung, et.) des Rotorblatts auf die Messung. Zudem werden die parasitären Empfindlichkeiten der Sensoren, wie zum Beispiel auf Temperatur, durch eine solche Anordnung kompensiert.

In WO 2017/000960A1 wird ein Messsystem beschrieben, das mit nur drei Dehnungssensoren pro Rotorblatt Blattbiegemomente bestimmen kann. Hierbei betrachten die Erfinder die Sensoren unabhängig voneinander, wobei keine Paarbildung vorgenommen wird, wodurch die Sensoren azimutal frei positioniert werden können. Die drei Sensoren sind dabei so angeordnet, dass kein Sensorpaar unter einem Winkel von 0° oder 180° zueinander stehen. Damit decken die Sensoren jeweils einen Teil der Biegemomente der benachbarten Sensoren ab. EP 2 354 538 A1 beschreibt ein Verfahren zur in-situ Kalibrierung von Lastsensoren einer Windturbine. WO 2017/000947 A1 beschreibt ein Blattlastabtastsystem für eine Windturbine

Eine Gruppe von Sensoren, die als Erfolg versprechend für zukünftige Applikationen erscheint, sind faseroptische Sensoren. Es ist daher erstrebenswert, Messungen zur Überwachung einer Windenergieanlage mit faseroptischen Sensoren weiter zu verbessern.

Im Allgemeinen ist es somit erstrebenswert Verbesserungen bei der Regelung und Überwachung, bei den Sensoren für ein Rotorblatt einer Windenergieanlage, bei Rotorblättern für Windenergieanlagen, und Windenergieanlagen selbst zu ermöglichen.

### ZUSAMMENFASSUNG DER ERFINDUNG

Gemäß einer Ausführungsform wird eine Anordnung zur Überwachung und/oder Regelung einer Windenergieanlage zur Verfügung gestellt. Die Anordnung beinhaltet einen ersten Dehnungssensor zur Messung eines ersten Blattbiegemoments eines Rotorblatts einer Windenergieanlage in einer ersten Raumrichtung; einen zweiten Dehnungssensoren zu Messung eines zweiten Blattbiegemoments eines Rotorblatts einer Windenergieanlage in einer zweiten Raumrichtung, die sich von der ersten Raumrichtung unterscheidet; eine Anordnung zur Bestimmung von Gleichanteilen von Kräften und Momenten der in der Windenergieanlage zur Verfügung gestellten Rotorblätter; und eine Steuerung zur Kombination des ersten Blattbiegemoments, des zweiten Blattbiegemoments und der Gleichanteile.

Gemäß einer anderen Ausführungsform wird ein Verfahren zur Überwachung und/oder Regelung einer Windenergieanlage zur Verfügung gestellt. Das Verfahren beinhaltet messen von Biegemomenten eines Rotorblatts der Windenergieanlage in mindestens zwei unterschiedlichen Raumrichtungen; und messen von Gleichanteilen von Kräften und Momenten von an der Windanlage zur Verfügung gestellten Rotorblätter; und überwachen und/oder Steuern der Windenergieanlage durch die Kombination der Blattbiegemoments und der Gleichanteile.

### KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:
FIG. 1 zeigt schematisch ein Rotorblatt einer Windenergieanlage mit Sensoren gemäß hier beschriebenen Ausführungsformen;
FIG. 2 zeigt schematisch einen Teil einer Windenergieanlage mit Rotorblättern und Sensoren gemäß hier beschriebenen Ausführungsformen;
FIG. 3 zeigt schematisch ein Rotorblatt einer Windenergieanlage mit Sensoren gemäß hier beschriebenen Ausführungsformen;
FIG. 4A zeigt schematisch einen Teil einer Windenergieanlage mit Rotorblättern und Sensoren gemäß weiteren hier beschriebenen Ausführungsformen;
FIG. 4B zeigt schematisch einen Querschnitt eines Rotorblattes einer Windenergieanlage mit Dehnungssensoren.
FIG. 5 zeigt schematisch einen Lichtleiter mit einem Faser-Bragg-Gitter zur Verwendung in Dehnungssensoren gemäß hier beschriebenen Ausführungsformen;
FIG. 6 zeigt schematisch einen Messaufbau für einen faseroptischen Dehnungssensor gemäß hier beschriebenen Ausführungsformen bzw. für Verfahren zur Überwachung und/oder Steuerung und/oder Regelung gemäß hier beschriebenen Ausführungsformen; und
FIG. 7 zeigt ein Ablaufdiagramm eines Verfahrens zur Überwachung und/oder Steuerung und/oder Regelung von Windenergieanlagen gemäß hier beschriebenen Ausführungsformen.

In den Zeichnungen bezeichnen gleiche Bezugszeichen gleiche oder funktionsgleiche Komponenten oder Schritte.

### WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

Blattbiegemomente im Rotorblatt einer Windenergieanlage können für viele Anwendungen genutzt werden. Hierzu zählen unter anderem eine Individuelle Blattanstellung eines Rotorblatts (Individual Pitch Control), eine Lastüberwachung, eine Spitzenlastabschaltung, die Erkennung eine Rotor Imbalance, oder eine Windfeldmessung.

Windenergieanlagen können durch Messtechnik in den Rotorblättern überwacht und geregelt werden. Weiterhin lassen sich eine oder mehrere der folgende Anwendungen umsetzen: Individuelle Blattanstellung eines Rotorblatts, Auftriebsoptimierung eines Rotorblatts, Lastregelung eines Rotorblatts bzw. der Windenergieanlage, Lastmessung an einem Rotorblatt bzw. an der Windenergieanlage, Zustandsbestimmung von Komponenten der Windenergieanlage, zum Beispiel Zustandsbestimmung eines Rotorblatt, Eiserkennung, Lebensdauerschätzung von Komponenten der Windenergieanlage zum Beispiel eines Rotorblattes, Regelung auf Windfelder, Regelung auf Nachlaufeffekte des Rotors, Regelung der Windenergieanlage auf Lasten, Regelung der Windenergieanlage in Bezug auf benachbarte Windenergieanlagen, Prädiktive Wartung, Turmfreigangsmessung, Spitzenlastabschaltung, und Unwuchterkennung.

Ausführungsformen der vorliegenden Erfindung betreffen eine Kombination von Dehnungs-Sensorik im Rotorblatt einer Windenergieanlage und die Messung bzw. Verwendung von Rotordaten. Gemäß hier beschriebenen Ausführungsformen, können die Blattbiegemomente in zwei Dimensionen geteilt werden: Schlag- und Schwenkrichtung. Über die Kenntnis des Blattanstellwinkels (Pitch-Winkel) können die Blattbiegemomente in Rotorebene und normal zur Rotorebene berechnet werden. Darüber hinaus können aus den ermittelten Biegemomenten der Blätter die Biegemomente des Rotors und die Biegemomente des über den Antriebsstrang gekoppelten Turms ermittelt werden.

Gemäß hier beschriebenen Ausführungsformen, die mit anderen Ausführungsformen kombiniert werden können, wird eine Anordnung zur Überwachung und/oder Regelung einer Windenergieanlage zur Verfügung gestellt. Die Anordnung beinhaltet einen ersten Dehnungssensor zur Messung eines ersten Blattbiegemoments eines Rotorblatts einer Windenergieanlage in einer ersten Raumrichtung; einen zweiten Dehnungssensoren zu Messung eines zweiten Blattbiegemoments eines Rotorblatts einer Windenergieanlage in einer zweiten Raumrichtung, die sich von der ersten Raumrichtung unterscheidet; eine Anordnung zur Bestimmung von Gleichanteilen von Kräften und Momenten der in der Windenergieanlage zur Verfügung gestellten Rotorblätter; und eine Steuerung zur Kombination des ersten Blattbiegemoments, des zweiten Blattbiegemoments und der Gleichanteile.

Messdaten, welche für eine präzise Blattbiegemomentenbestimmung bisher durch weitere Lastsensoren im Rotorblatt erfasst wurden, werden über Rotordaten abgeleitet. Rotordaten umfassen hierbei unter anderem den Rotorwinkel, die Rotorgeschwindigkeit, die Pitchwinkel, und/oder Rotorvibrationen. Gemäß einigen Ausführungsformen, können ein oder mehrere Rotordaten durch einen oder mehrere Beschleunigungssensoren, einen oder mehrere Gyroskop-Sensoren, durch einen oder mehrere von in der Anlage verbauten Drehwinkelgeber, oder ähnlichen, oder durch eine Kombination hieraus ermittelt werden. Es kann durch Ausführungsformen der Erfindung auf eine Instrumentierung von mehr als zwei Lastsensoren im Rotorblatt abgesehen werden, unter Beibehaltung der Präzision.

Gemäß weiteren Ausführungsformen, die mit anderen hier beschriebenen Ausführungsformen kombiniert werden können, können für die Dehnungsmessung temperaturkompensierte Dehnungssensoren, zum Beispiel passiv temperaturkompensierte Dehnungssensoren, verwendet, insbesondere faseroptische temperaturkompensierte Dehnungssensoren. Temperaturkompensierte Dehnungssensoren, insbesondere passiv temperaturkompensierte Dehnungssensoren, sind temperaturinvariant. Sie werden mit einer Aufnehmerstruktur, die thermische Ausdehnung des Blattmaterials kompensieren kann, zur Verfügung gestellt. Es kann so eine höhere Präzision in der Bestimmung der Blattbiegemomente erreicht werden.

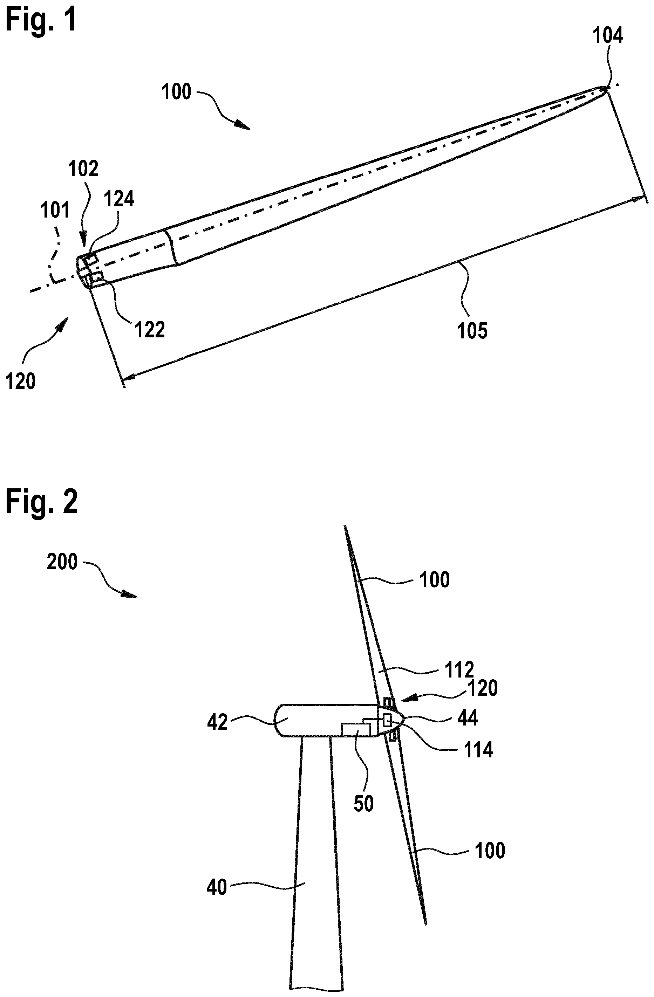

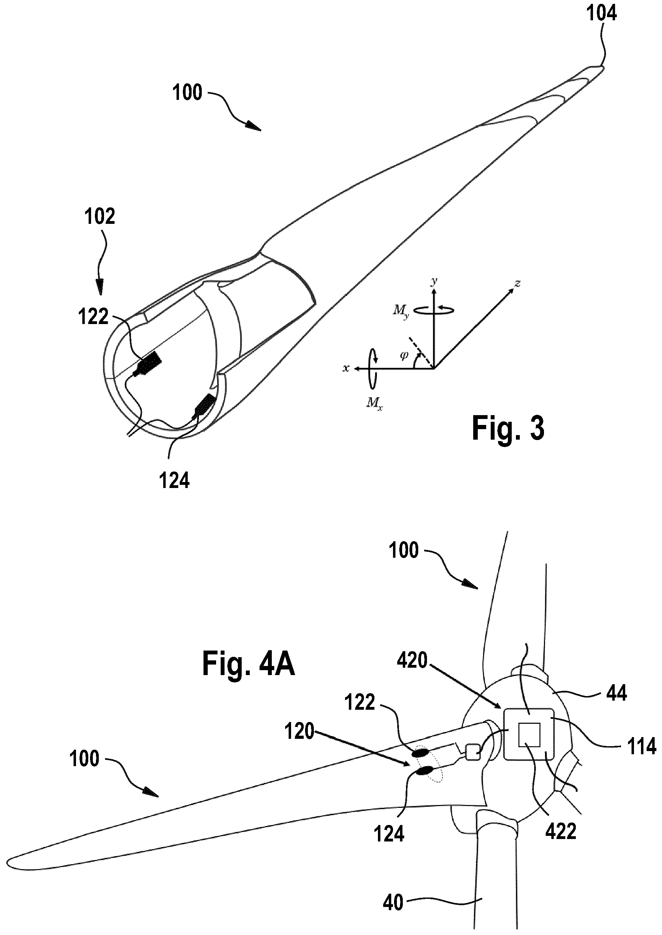

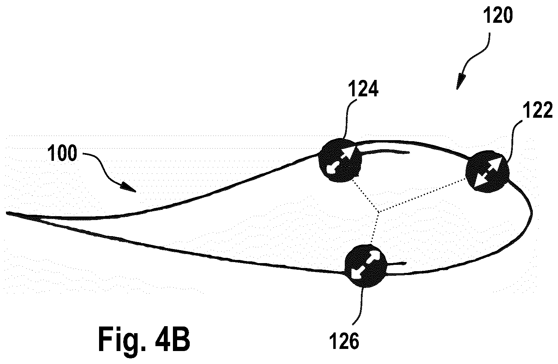

FIG. 1 zeigt ein Rotorblatt 100 einer Windenergieanlage. Das Rotorblatt 100 hat eine Achse 101 entlang seiner Längserstreckung. Die Länge 105 des Rotorblatts reicht von dem Blattflansch 102, bzw. der Blattwurzel, zu der Blattspitze 104. FIG. 1 zeigt weiterhin eine Anordnung 120 von Dehnungssensoren oder Dehnungsmessstreifen. Die Anordnung 120 enthält einen ersten Dehnungssensor 122, und einen zweiten Dehnungssensor 124. Diese Anordnung wird unter Bezugnahme auf die FIGS. 3, 4A und 4B näher erläutert. Die Anordnung von zwei Dehnungssensoren kann zwei unterschiedliche Raumrichtungen erfassen, insbesondere die Schwenkrichtung und die Schlagrichtung.

Die Blattlasten an einer Windenergieanlage werden dominiert von Blattbiegemomenten. Ziel ist es die Blattbiegemomente im Rotorblatt zu bestimmen, um diese Lasten zu überwachen oder darauf zu regeln und diese damit zu minimieren. Blattbiegemomente stellen für die Messtechnik im Allgemeinen eine mittelbare Messgröße dar. Nach Norm IEC 61400-13 zur Blattlastmessung in Windenergieanlagen werden die Lasten indirekt über die Messung der Blattdehnungen bestimmt. Die gemessenen Dehnungen stellen dabei die unmittelbare Messgröße dar. Über eine Kalibrierung des Messsystems kann die Übertragungsfunktion der Blattbiegemomente in die Dehnungssignale ermittelt werden. Durch Bildung der Umkehrfunktion kann anschließend aus den gemessenen Dehnungssignalen auf die Blattbiegemomente geschlossen werden.

Nach Norm IEC 61400-13 werden die Blattdehnungen mittels vier Dehnungssensoren bestimmt. Die Dehnungssensoren werden dabei an einem Blattradius mit Empfindlichkeitsvektor parallel zur Blattachse appliziert. Die vier Dehnungssensoren werden azimutal in einem Winkelraster von 90° angeordnet, wobei idealerweise jeweils zwei gegenüberliegende Sensoren azimutal am Rotorblattkoordinatensystem in Schwenk- und Schlagrichtung ausgerichtet sind. Durch die gegenüberliegenden Sensoren wird eine Dehnungshalbbrücke realisiert, welche die Temperaturausdehnung des Substratmaterials in erster Ordnung kompensiert. Zudem werden Temperatursensoren nahe den Dehnungssensoren appliziert, um Temperatureinflüsse am Messobjekt und an der Sensorik kompensieren zu können.

FIG. 2 zeigt eine Windenergieanlage 200. Die Windenergieanlage 200 beinhaltet einen Turm 40 und eine Gondel 42. An der Gondel 42 ist der Rotor befestigt. Der Rotor beinhaltet eine Nabe 44, an der die Rotorblätter 100 befestigt sind. Gemäß typischen Ausführungsformen hat der Rotor zumindest 2 Rotorblätter, insbesondere drei Rotorblätter. Beim Betrieb der Windenergieanlage bzw. der Windenergieanlage rotiert der Rotor, d.h. die Nabe mit den Rotorblättern um eine Achse. Dabei wird ein Generator zur Stromerzeugung angetrieben. Wie in FIG. 2 dargestellt, enthält ein Rotorblatt eine Anordnung 120 von Dehnungssensoren. Die Auswerteeinheit 114 liefert ein Signal an eine Steuerung und/oder Regelung 50 der Windenergieanlage 200.

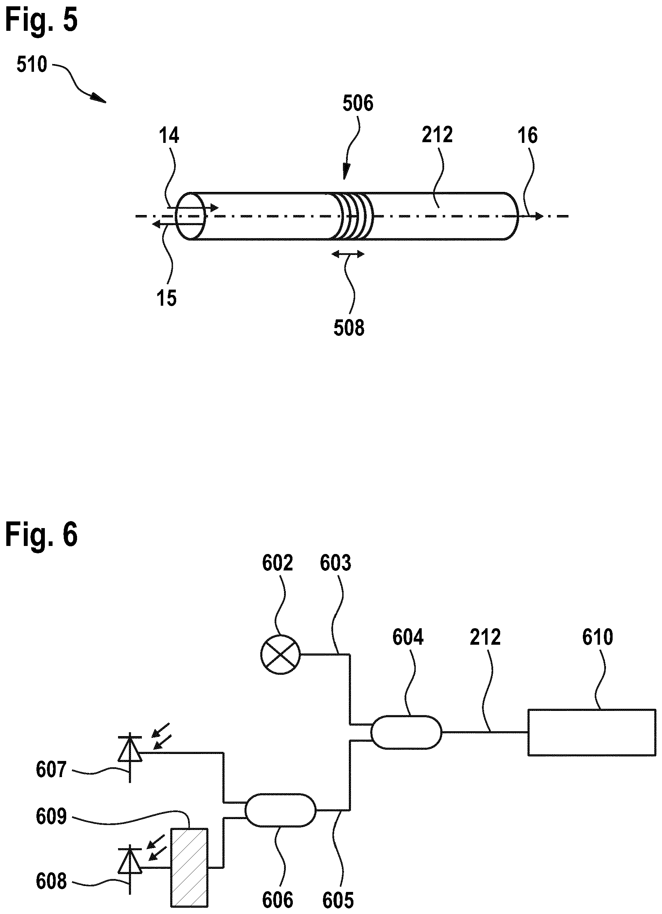

Gemäß einigen Ausführungsformen, die mit anderen Ausführungsformen kombiniert werden können, handelt es sich bei den Dehnungssensoren um faseroptische Dehnungssensoren. Für faseroptische Dehnungssensoren wird ein optisches Signal mittels eines Lichtleiters, zum Beispiel einer optischen Faser, an die Auswerteeinheit 114 übertragen. Bei einem faseroptischen Dehnungssensor wird das eigentliche Sensorelement typischerweise innerhalb einer optischen Faser zur Verfügung gestellt, zum Beispiel in Form eines Faser-Bragg-Gitters. Dies ist im Detail in Bezug auf die FIGS. 5 und 6 beschrieben.

Die oben genannten Ausführungsformen und Anwendungen können durch eine Kombination aus Dehnungssensoren und Rotordaten ermöglicht werden. Gemäß einigen hier beschriebenen Ausführungsformen, wie es in FIG. 3 dargestellt ist, werden zwei Dehnungssensoren verwendet. Für die Bestimmung der Blattlasten werden die Dehnungssensoren genutzt, welche so angeordnet sind, dass die Blattbiegemomente in Schlag- und Schwenkrichtung optimal abgebildet werden. Ein Gleichanteil der Messung wird zum Beispiel durch einen dritten Sensor im Rotor oder Rotordaten basierend auf anderen Komponenten kompensiert.

Gemäß einigen Ausführungsformen, wie zum Beispiel in FIG. 4B dargestellt ist, kann ein weiterer Dehnungssensor im Rotorblatt zur Verfügung gestellt sein. Durch die Verwendung von drei Dehnungssensoren kann eine Redundanz und damit eine erhöhte Sicherheit gegenüber Ausfällen realisiert. Weiterhin ist es möglich, gemäß hier beschriebenen Ausführungsformen temperaturkompensierte Dehnungssensoren zu verwenden, insbesondere temperaturkompensierte faseroptische Dehnungssensoren. Durch Verwendung temperaturkompensierter Dehnungssensoren kann der Einfluss durch Temperatur auf die Bestimmung der Blattbiegemomente minimiert werden. Faseroptische Dehnungssensoren ermöglichen darüber hinaus durch ihre hohe Spitzen- und Dauerlastfestigkeit eine hohe Zuverlässigkeit der Blattbiegemomentenbestimmung.

Gemäß hier beschriebenen Ausführungsformen, wie exemplarisch in FIG. 3 dargestellt, werden um die Blattbiegemomente in Schlag- und Schwenkrichtung zu bestimmen, zwei Dehnungssensoren in der Blattwurzel 102 verbaut. Ein erster Dehnungssensor 122 kann ein Biegemoment in X-Richtung messen. Ein zweiter Dehnungssensor 124 kann ein Biegemoment in Y-Richtung messen. Die Dehnungssensoren werden so angeordnet, dass sie im Idealfall azimutal, orthogonal zueinander stehen und somit das Koordinatensystem des Rotorblatts in Schlag- und Schwenkrichtung optimal abdecken.

Durch Sensorik in der Nabe, siehe zum Beispiel Sensor 422 in Figur 4A, kann u. a. die Gravitationskraft und die Zentripetalkraft auf die Rotorblätter abgeleitet werden. Die Messgrößen können zum Beispiel über zusätzliche Sensorik in der Nabe abgeleitet werden. Der Sensor 422 kann zum Beispiel ein Beschleunigungssensor und/oder Gyrosensor sein. Alternativ oder zusätzlich können die Messgrößen für den Rotor über vorhandene Sensoren auf der Anlage, zum Beispiel Drehwinkelgeber für Pitch, Antriebsstrang, und Azimut, abgeleitet werden.

Werden Sensoren, wie zum Beispiel Beschleunigungssensoren, in der Nabe oder den Rotorblättern verwendet, so kann aus diesen direkt die Gravitationskraft und Zentripetalkraft ermittelt werden, welche auf die Nabe oder Rotorblätter wirkt. Die Bestimmung von Rotorwinkel und Rotorgeschwindigkeit aus den Beschleunigungssignalen ist demnach nicht erforderlich. Werden Beschleunigungssensoren in den Rotorblättern verwendet, ist auch eine Ermittlung der Pitchwinkel nicht erforderlich

Über die Fusion bzw. Kombination dieser Daten kann präzise auf die Blattbiegemomente des einzelnen Blattes, sowie auf die physikalischen Parameter des ganzen Rotors geschlossen werden. Vor allem bietet die Nutzung der Sensordaten des Rotors die Reduktion der Sensoren im Rotorblatt.

Gemäß hier beschriebene Ausführungsformen, kann eine Anordnung 120 von Dehnungssensoren, zum Beispiel einem ersten Dehnungssensor 122 und einem zweiten Dehnungssensoren 124, in einem Rotorblatt zur Verfügung gestellt sein. Die Anordnung 120 kann in oder nahe der Blattwurzel zur Verfügung gestellt sein. Die Blatt Biegemoment werden zum Beispiel in Schwenkrichtung und in Schlagrichtung gemessen. Eine weitere Anordnung 420 zu Messung von Rotordaten kann, wie exemplarisch in Figur 4A dargestellt, in der Rotornabe 44 zur Verfügung gestellt sein. Die Anordnung 420 kann einen Sensor 422 beinhalten, zum Beispiel einem Beschleunigungssensor und/oder einen Gyrosensor. Rotordaten können alternativ oder zusätzlich durch in der Windenergieanlage enthaltenen Signale zur Verfügung gestellt werden.

Die Anordnung 420 kann Gleichanteile an Kräften und Momenten der Rotorblätter ermitteln. Die Messung der Gleichanteile an Kräften und Momenten in den Rotorblättern, zum Beispiel drei Rotorblättern, können über eine zentrale Sensorstelle in der Nabe, in der Gondel, oder am Antriebsstrang ermittelt werden. Bei herkömmlichen Lösungen wurden die Gleichanteile für jedes Blatt einzeln mithilfe jeweils zusätzlicher Sensorik im Blatt realisiert. Durch die Verwendung einer zentralen Anordnung 420 zur Erfassung von Rotordaten oder die Verwendung von Rotordaten der Windenergieanlage kann weniger Sensorik im Rotorblatt instrumentiert werden. Ebenfalls werden weniger Messkanäle am Messverstärker der Messung der Biegemomente benötigt. Somit kann ein günstigeres System zur Messung verwendet werden, da auf Sensorik und aufwändigere Installation im Rotorblatt verzichtet werden kann bzw. die Sensorik und Installation im Rotorblatt reduziert werden kann. Zudem verkürzt sich die Installationszeit.

Durch die Anbringung der Sensorik in der Nabe oder in der Gondel kann weiterhin auf aufwändige Blitzschutzeinrichtungen verzichtet werden, da diese sich entsprechend in einer geschlossenen Blitzschutzzone befinden. Durch den Rückgriff auf bereits installierte Sensorik durch den Anlagenhersteller, wie Drehwinkelgeber an Pitch, Antriebsstrang, Azimut, und weitere Sensorik wie Temperatur, kann auf die Installation zusätzlicher Sensorik gänzlich verzichtet werden. Hierdurch werden weiter Kosten und Installationsaufwände eingespart.

Stehen in den Rotorblättern Beschleunigungssensoren zur Verfügung, können diese Beschleunigungssensorsignale zur Messung der Gleichanteile der Kräfte und Momente verwendet werden. Auf Sensorik in der Nabe oder in der Gondel sowie einen Rückgriff auf weitere Sensorik des Anlagenherstellers, wie Drehwinkelgeber an Pitch, Antriebsstrang, Azimut, kann in diesem Fall verzichtet werden.

Ausführungsformen der vorliegenden Erfindung zur Bestimmung der Blattbiegemomente reduzieren eine Überbestimmung der Messung Blattbiegemomente, um Gleichanteile der Kräfte und Momente zu kompensieren. Eine Überbestimmung, die durch zusätzliche Sensorik, installiert in allen Rotorblättern, realisiert werden könnte, kann reduziert werden. Durch die Anordnung 420 mit Sensorik in der Nabe bzw. am Antriebsstrang, oder anderweitig in der Gondel, um die Gleichanteile der Kräfte und Momente der Rotorblätter zu kompensieren, kann ein kostengünstigeres System zur Verfügung gestellt werden. Es ist möglich, mit nur zwei Dehnungssensoren pro Rotorblatt die Blattbiegemomente in gleicher Qualität, wie mit mehreren Sensoren pro Rotorblatt, zu bestimmen.

FIG. 4B zeigt ein Querschnitt eines Rotorblatts 100, sowie eine Anordnung von drei Dehnungssensoren, wobei die Dehnungssensoren zum Beispiel in der Blattwurzel oder nahe der Blattwurzel angebracht sein können. Gemäß einigen hier beschriebenen Ausführungsformen, können die drei Dehnungssensoren in einem Winkelraster von etwa 120° angebracht werden, wobei eine Abweichung von +-20°, insbesondere +- 10° möglich ist. Idealerweise wird ein azimutales Winkelraster von 120° verwendet um das Blattkoordinatensystem abzudecken. Der azimutale Winkel kann sich auf die Koordinaten in der Blattwurzel, zum Beispiel mit einer Mittelpunktsachse parallel zur Länge des Rotorblatts beziehen. D.h. der azimutale Winkel bezieht sich auf ein Koordinatensystem des Rotorblatts. Die Blattbiegemomente werden über eine reduzierte Verschaltung mittels drei Dehnungssensoren realisiert:

Im Allgemeinen können durch zwei Dehnungssensoren, zum Beispiel in Schlagrichtung und Schwenkrichtung die Blattbiegemomente bestimmt werden. Nach Norm IEC 61400-13 werden die Blattdehnungen mittels vier Dehnungssensoren bestimmt. Betrachtet man die Überlebenswahrscheinlichkeiten eines Dehnungssensors statistisch, so ergibt sich durch drei Dehnungssensoren eine signifikante Erhöhung der Überlebenswahrscheinlichkeit des Gesamtsystems im Vergleich zu einem System mit zwei Dehnungssensoren. Eine weitere Erhöhung der Überlebenswahrscheinlichkeit des Gesamtsystems durch vier Sensoren ist jedoch dementsprechend gering. Eine Anordnung 120 aus drei Dehnungssensoren zu Bestimmung von Blattbiegemomenten eines Rotorblatts einer Windenergieanlage bietet somit eine ähnlich hohe Überlebenswahrscheinlichkeit des Gesamtsystems zur Bestimmung von Blattbiegemomenten bei reduzierten Materialaufwand und somit reduzierten Energiegestehungskosten. Zugleich können mit drei Dehnungssensoren die Zentripetalkräfte und Gleichanteile von Temperatureffekten kompensiert werden. Gemäß typischen Ausführungsformen, können die Dehnungssensoren faseroptische Dehnungssensoren sein. Weiterhin ist es möglich, Temperatur kompensierte faseroptische Sensoren zu verwenden.

Gemäß hier beschriebenen Ausführungsformen, die mit anderen Aspekten, Details, und Ausführungsformen kombiniert werden können ist eine Anordnung zur Überwachung und/oder Regelung einer Windenergieanlage zur Verfügung gestellt. Die Anordnung beinhaltet einen ersten Dehnungssensor (122) zur Messung eines ersten Blattbiegemoments eines Rotorblatts einer Windenergieanlage in einer ersten Raumrichtung; einen zweiten Dehnungssensoren (124) zu Messung eines zweiten Blattbiegemoments eines Rotorblatts einer Windenergieanlage in einer zweiten Raumrichtungen, die sich von der ersten Raumrichtung unterscheidet; und einen dritten Dehnungssensor, wobei der erste Dehnungssensor, der zweite Dehnungssensor und der dritte Dehnungssensor in Kombination zwei Biegemomente ermitteln.

Fig. 5 zeigt einen in einen Lichtwellenleiter integrierten Sensor bzw. einen faseroptischen Sensor 510, welche ein Faser-Bragg-Gitter 506 aufweist. Obwohl in Fig. 5 nur ein einziges Faser-Bragg-Gitter 506 gezeigt ist, ist zu verstehen, dass die vorliegende Erfindung nicht auf eine Datenerfassung aus einem einzelnen Faser-Bragg-Gitter 506 beschränkt ist, sondern dass längs eines Lichtleiters 212, einer Übertragungsfaser, einer Sensorfaser bzw. einer optischen Faser eine Vielzahl von Faser-Bragg-Gittern 506 angeordnet sein können.

Fig. 5 zeigt somit nur einen Abschnitt eines optischen Wellenleiters, welcher als Sensorfaser, optischer Faser bzw. Lichtleiter 212 ausgebildet ist, wobei diese Sensorfaser empfindlich auf eine Faserdehnung (siehe Pfeil 508) ist. Es sei hier darauf hingewiesen, dass der Ausdruck "optisch" bzw. "Licht" auf einen Wellenlängenbereich im elektromagnetischen Spektrum hinweisen soll, welcher sich vom ultravioletten Spektralbereich über den sichtbaren Spektralbereich bis hin zu dem infraroten Spektralbereich erstrecken kann. Eine Mittenwellenlänge des Faser-Bragg-Gitters 506, d.h. eine so genannte Bragg-Wellenlänge λB, wird durch die folgende Gleichung erhalten:$λ B = 2 ⋅ nk ⋅ Λ .$

Hierbei ist nk die effektive Brechzahl des Grundmodus des Kerns der optischen Faser und A die räumliche Gitterperiode (Modulationsperiode) des Faser-Bragg-Gitters 506.

Eine spektrale Breite, die durch eine Halbwertsbreite der Reflexionsantwort gegeben ist, hängt von der Ausdehnung des Faser-Bragg-Gitters 506 längs der Sensorfaser ab. Die Lichtausbreitung innerhalb der Sensorfaser bzw. des Lichteiters 212 ist somit durch die Wirkung des Faser-Bragg-Gitters 506 beispielsweise abhängig von Kräften, Momenten und mechanischen Spannungen sowie Temperaturen, mit der die Sensorfaser, d.h. die optische Faser und insbesondere das Faser-Bragg-Gitter 506 innerhalb der Sensorfaser beaufschlagt werden.

Wie in Fig. 5 gezeigt, tritt elektromagnetische Strahlung 14 oder Primärlicht von links in die optische Faser bzw. den Lichtleiter 112 ein, wobei ein Teil der elektromagnetischen Strahlung 14 als ein transmittiertes Licht 16 mit einem im Vergleich zur elektromagnetischen Strahlung 14 veränderten Wellenlängenverlauf austritt. Ferner ist es möglich, reflektiertes Licht 15 am Eingangsende der Faser (d.h. an dem Ende, an welchem auch das elektromagnetische Strahlung 14 eingestrahlt wird) zu empfangen, wobei das reflektierte Licht 15 ebenfalls eine modifizierte Wellenlängenverteilung aufweist. Das optische Signal, das zur Detektion und Auswertung verwendet wird, kann gemäß den hier beschriebenen Ausführungsformen durch das reflektieret Licht, durch das transmittierte Licht, sowie eine Kombination der beiden zur Verfügung gestellt werden.

In einem Fall, in dem die elektromagnetische Strahlung 14 bzw. das Primärlicht in einem breiten Spektralbereich eingestrahlt wird, ergibt sich in dem transmittierten Licht 16 an der Stelle der Bragg-Wellenlänge ein Transmissionsminimum. In dem reflektierten Licht ergibt sich an dieser Stelle ein Reflexionsmaximum. Eine Erfassung und Auswertung der Intensitäten des Transmissionsminimums bzw. des Reflexionsmaximums, oder von Intensitäten in entsprechenden Wellenlängenbereichen erzeugt ein Signal, das im Hinblick auf die Längenänderung der optischen Faser bzw. des Lichtleiters 112 ausgewertet werden kann und somit auf Kräfte bzw. Vibrationen Aufschluss gibt.

FIG. 6 zeigt ein typisches Messsystem zur Auswertung von faseroptischen u.a. Dehnungssensoren. Das System weist eine Quelle 602 für elektromagnetische Strahlung, zum Beispiel eine Primärlichtquelle, auf. Die Quelle dient zur Bereitstellung von optischer Strahlung mit welcher mindestens ein faseroptisches Sensorelement eines Sensors, zum Beispiel eines Dehnungssensors, bestrahlt werden kann. Zu diesem Zweck ist eine optische Übertragungsfaser bzw. ein Lichtleiter 603 zwischen der Primärlichtquelle 602 und einem ersten Faserkoppler 604 bereitgestellt. Der Faserkoppler koppelt das Primärlicht in die optische Faser bzw. dem Lichtleiter 112. Die Quelle 602 kann zum Beispiel eine Breitbandlichtquelle, ein Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das faseroptische Sensorelement 610, wie zum Beispiel ein Faser-Bragg-Gitter (FBG) oder ein optischer Resonator, ist in eine Sensorfaser integriert bzw. an die Sensorfaser optisch angekoppelt. Das von den faseroptischen Sensorelementen zurückgeworfene Licht wird wiederum über den Faserkoppler 604 geleitet, welcher das Licht über die Übertragungsfaser 605 einen Strahlteiler 606 leitet. Der Strahlteiler 606 teilt das zurückgeworfene Licht zur Detektion mittels eines ersten Detektors 607 und eines zweiten Detektors 608. Hierbei wird das auf dem zweiten Detektor 608 detektierte Signal zunächst mit einem optischen Kantenfilter 609 gefiltert.

Durch den Kantenfilter 609 kann eine Verschiebung der Braggwellenlänge am FBG bzw. eine Wellenlängenänderung durch den optischen Resonator detektiert werden. Im Allgemeinen kann ein Messsystem, wie es in FIG. 6 dargestellt ist, ohne den Strahlteiler 606 bzw. den Detektor 607 zur Verfügung gestellt sein. Der Detektor 607 ermöglicht jedoch eine Normierung des Messsignals des Dehungssensors in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, oder andere Intensitätsschwankungen. Diese Normierung verbessert die Messgenauigkeit und reduziert die Abhängigkeit von Messsystemen von der Länge der zwischen der Auswerteeinheit und dem faseroptischen Sensor zur Verfügung gestellten Lichtleiter.

Insbesondere bei der Verwendung von mehreren FBGs können zusätzliche optische Filtereinrichtungen (nicht dargestellt) für die Filterung des optischen Signales bzw. Sekundärlichts verwendet werden. Eine optische Filtereinrichtung 609 bzw. zusätzliche optische Filtereinrichtungen können einen optischen Filter umfassen, der gewählt ist aus der Gruppe, welche besteht aus einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

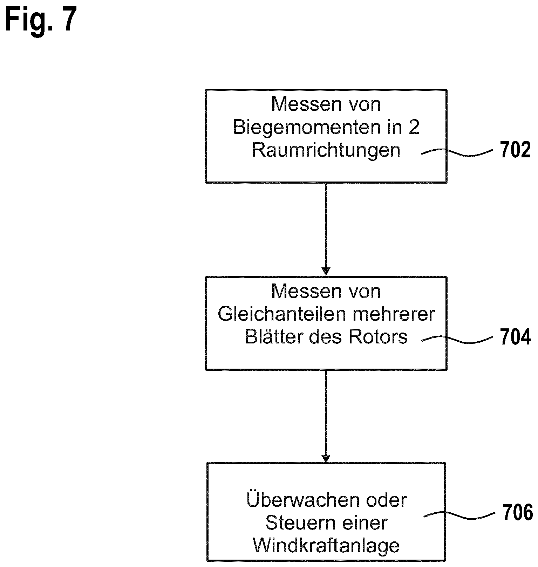

Ein weiterer Aspekt bei der Überwachung von Windenergieanlagen, der mit anderen hier beschriebenen Ausführungsformen und Aspekten kombiniert werden kann, der jedoch auch unabhängig von weiteren Ausführungsformen, Aspekte und Details zur Verfügung gestellt ist, ist ein verbessertes Verfahren zur Überwachung und Steuerung und/oder Regelung einer Windenergieanlage mit Vibrationssensoren und Dehnungssensoren, insbesondere faseroptischen Vibrationssensor und faseroptischen Dehnungssensoren. Eine oder mehrere der folgende Anwendungen kann umsetzt werden: Individuelle Blattanstellung eines Rotorblatts, Auftriebsoptimierung eines Rotorblatts, Lastregelung eines Rotorblatts bzw. der Windenergieanlage, Lastmessung an einem Rotorblatt bzw. an der Windenergieanlage, Zustandsbestimmung von Komponenten der Windenergieanlage, zum Beispiel Zustandsbestimmung eines Rotorblatt, Eiserkennung, Lebensdauerschätzung von Komponenten der Windenergieanlage zum Beispiel eines Rotorblattes, Regelung auf Windfelder, Regelung auf Nachlaufeffekte des Rotors, Regelung der Windenergieanlage auf Lasten, Regelung der Windenergieanlage in Bezug auf benachbarte Windenergieanlagen, Prädiktive Wartung, Turmfreigangsmessung, Spitzenlastabschaltung, und Unwuchterkennung. Gemäß einem solchen Aspekt bzw. einer solchen Ausführungsform wird ein Verfahren zur Überwachung oder Steuerung bzw. Regelung einer Windenergieanlage zur Verfügung gestellt. Das Verfahren beinhaltet Messen von Biegemomenten eines Rotorblatts der Windenergieanlage in mindestens zwei unterschiedlichen Raumrichtungen (siehe Bezugszeichen 702 in FIG. 7); Messen von Gleichanteilen von Kräften und Momenten von an der Windanlage zur Verfügung gestellten Rotorblätter (siehe Bezugszeichen 704 in FIG. 7); und Überwachen und/oder Steuern der Windenergieanlage durch die Kombination der Blattbiegemoments und der Gleichanteile. (siehe Bezugszeichen 706 in FIG. 7)

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1. Eine Anordnung zur Überwachung und/oder Regelung einer Windenergieanlage, umfassend:
einen ersten Dehnungssensor (122) zur Messung eines ersten Blattbiegemoments eines Rotorblatts einer Windenergieanlage in einer ersten Raumrichtung;
einen zweiten Dehnungssensor (124) zur Messung eines zweiten Blattbiegemoments eines Rotorblatts einer Windenergieanlage in einer zweiten Raumrichtung, die sich von der ersten Raumrichtung unterscheidet;
eine Anordnung (420) zur Bestimmung von Gleichanteilen von Kräften und Momenten der in der Windenergieanlage zur Verfügung gestellten Rotorblätter; und
eine Steuerung zur Kombination des ersten Blattbiegemoments, des zweiten Blattbiegemoments und der Gleichanteile,
wobei die Anordnung (420) zur Bestimmung von Gleichanteilen einen Sensor (422) umfasst.

2. Das Rotorblatt gemäß Anspruch 1, wobei die Anordnung (420) in der Nabe oder Gondel der Windenergieanlage zur Verfügung gestellt ist.

3. Die Anordnung gemäß einem der Ansprüche 1-2, wobei die erste Raumrichtung und die zweite Raumrichtung einen Winkel von 70° bis 110° einschließen.

4. Die Anordnung gemäß einem der Ansprüche 1-3, wobei der erste Dehnungssensoren und der zweite Dehnungssensoren in einem azimutalen Winkelraster von etwa 90° angeordnet sind.

5. Die Anordnung gemäß einem der Ansprüche 1-3, weiterhin umfassen:
zumindest einen dritten Dehnungssensor, wobei der erste Dehnungssensor, der zweite Dehnungssensor und der dritte Dehnungssensor in Kombination zwei Biegemomente ermitteln.

6. Die Anordnung gemäß einem der Ansprüche 1-5, wobei die Dehnungssensoren faseroptische Dehnungssensoren sind.

7. Das Rotorblatt gemäß einem der Ansprüche 1-6, wobei die Dehnungssensoren im Bereich einer Blattwurzel des Rotorblatts angeordnet sind.

8. Ein Verfahren zur Überwachung und/oder Regelung einer Windenergieanlage, umfassend:
Messen von Biegemomenten eines Rotorblatts der Windenergieanlage in mindestens zwei unterschiedlichen Raumrichtungen; und
Messen von Gleichanteilen von Kräften und Momenten von an der Windenergieanlage zur Verfügung gestellten Rotorblätter mit einer Anordnung (420);
Überwachen und/oder Steuern der Windenergieanlage durch die Kombination der Blattbiegemomente und der Gleichanteile,
wobei die Gleichanteile der Kräfte und Momente von zwei oder mehr Rotorblättern mit einem Sensor (422) gemessen werden.

## Claims

1. An assembly for monitoring and/or controlling a wind turbine, comprising:
a first load sensor (122) for measuring a first blade bending moment of a rotor blade of a wind turbine in a first spatial direction;
a second load sensor (124) for measuring a second blade bending moment of a rotor blade of a wind turbine in a second spatial direction different from the first spatial direction;
an assembly (420) for determining direct components of forces and moments of the rotor blades provided in the wind turbine; and
a controller for combining the first blade bending moment, the second blade bending moment, and the direct components,
wherein the assembly (420) for determining direct components comprises a sensor (422).

2. The assembly of claim 1, wherein the assembly (420) is provided in the hub or nacelle of the wind turbine.

3. The assembly of any one of claims 1-2, wherein the first spatial direction and the second spatial direction form an angle between 70° and 110°.

4. The assembly of any one of claims 1-3, wherein the first load sensor and the second load sensor are arranged in an azimuthal angle grid of about 90°.

5. The assembly of any one of claims 1-3, further comprising:
at least one third load sensor, wherein the first load sensor, the second load sensor, and the third load sensor combined determine two bending moments.

6. The assembly of any one of claims 1-5, wherein the load sensors are fiber optic load sensors.

7. The rotor blade of any one of claims 1-6, wherein the load sensors are arranged in the area of a blade root of the rotor blade.

8. A method for monitoring and/or controlling a wind turbine, comprising:
measuring bending moments of a rotor blade of the wind turbine in at least two different spatial directions; and
measuring direct components of forces and moments of rotor blades provided on the wind turbine using an assembly (420);
monitoring and/or controlling the wind turbine by combining the blade bending moments and the direct components;
wherein the direct components of the forces and moments of two or more rotor blades are measured using a sensor (422).

## Revendications

1. Ensemble permettant de surveiller et/ou de réguler une éolienne, comprenant :
un premier capteur de contrainte (122) pour mesurer un premier moment de flexion de pale d'une pale de rotor d'une éolienne dans une première direction spatiale ;
un deuxième capteur de contrainte (124) pour mesurer un deuxième moment de flexion de pale d'une pale de rotor d'une éolienne dans une deuxième direction spatiale qui est différente de la première direction spatiale ;
un ensemble (420) pour déterminer des composantes continues de forces et de moments des pales de rotor fournies dans l'éolienne ; et
un dispositif de commande pour combiner le premier moment de flexion de pale, le deuxième moment de flexion de pale et les composantes continues,
dans lequel l'ensemble (420) comprend un capteur (422) pour déterminer des composantes continues.

2. Ensemble selon la revendication 1, dans lequel l'ensemble (420) est fourni dans le moyeu ou la nacelle de l'éolienne.

3. Ensemble selon l'une quelconque des revendications 1 ou 2, dans lequel la première direction spatiale et la deuxième direction spatiale forment un angle de 70° à 110°.

4. Ensemble selon l'une quelconque des revendications 1 à 3, dans lequel le premier capteur de contrainte et le deuxième capteur de contrainte sont disposés dans une grille angulaire azimutale d'environ 90°.

5. Ensemble selon l'une quelconque des revendications 1 à 3, comprenant en outre : au moins un troisième capteur de contrainte, dans lequel le premier capteur de contrainte, le deuxième capteur de contrainte et le troisième capteur de contrainte établissent en combinaison deux moments de flexion.

6. Ensemble selon l'une quelconque des revendications 1 à 5, dans lequel les capteurs de contrainte sont des capteurs de contrainte à fibre optique.

7. Pale de rotor selon l'une quelconque des revendications 1 à 6, dans lequel les capteurs de contrainte sont disposés au niveau d'un pied de pale de la pale de rotor.

8. Procédé permettant de surveiller et/ou de réguler une éolienne, comprenant les étapes consistant à :
mesurer des moments de flexion d'une pale de rotor de l'éolienne dans au moins deux directions spatiales différentes ; et
mesurer des composantes continues de forces et de moments des pales de rotor fournies au niveau d'une éolienne avec un ensemble (420) ;
surveiller et/ou commander l'éolienne par la combinaison du moments de flexion de pale et des composantes continues ;
dans lequel les composantes continues des forces et des moments sont mesurées par deux ou plusieurs pales de rotor à l'aide d'un capteur (422).
